# EUROPÄISCHE PATENTSCHRIFT

(11) **EP 1 598 166 B1**
(45) Veröffentlichungstag und Bekanntmachung des Hinweises auf die Patenterteilung: **09.05.2007**
(21) Anmeldenummer: 05010440.5
(22) Anmeldetag: 13.05.2005
(51) Int. Cl.: B29C 47/02, B29C 47/06, B32B 37/15, B05D 1/26

(54) **Verfahren zum Extrusionsbeschichten mit Nano-Partikel enthaltendem Polyamid**
Process for extrusion coating with nano-particles containing polyamide
Procédé de revêtement par extrusion de polyamide avec nanoparticules

(30) Priorität: 21.05.2004 DE 102004025001
(43) Veröffentlichungstag der Anmeldung: 23.11.2005
(73) Patentinhaber: LANXESS Deutschland GmbH, 51369 Leverkusen (DE)
(72) Erfinder: Ulrich, Ralph, Dr., 40882 Ratingen (DE); Littek, Wolfram, 42699 Solingen (DE); Schulte, Helmut, 47803 Krefeld (DE); Huffmann, Dietbert, 42327 Wuppertal (DE)

(56) Entgegenhaltungen:
- EP-A- 0 607 085
- DE-A1- 2 111 854
- US-A1- 2001 009 718

## Beschreibung

Die vorliegende Erfindung betrifft ein Extrusionsverfahren zur Beschichtung von Substraten mit Polyamiden durch den Einsatz nanoskaliger Partikel und mit Extrusionsgeschwindigkeiten von mindestens 250 m/min, wodurch "Edge waving" und "Neck-in" vermieden werden.

Durch die Extrusionsbeschichtung lassen sich eine Vielzahl von Eigenschaften von Verpackungen positiv beeinflussen. Durch Beschichten mit thermoplastischem Kunststoff werden z.B. Verbesserungen in Bereichen wie mechanische Eigenschaften, Sperrwirkung gegen Wasser, Gase, Fett, Aromastoffe etc., Bedruckbarkeit und optische Eigenschaften erzielt. Ebenfalls kann man die Siegelfähigkeit verbessern.

Typische Beispiele für Produkte die via Extrusionsbeschichtung hergestellt werden sind z.B. die Beschichtung von Papier mit Polyethylen (PE) oder z.B. dicke Beschichtungen (25-100 g/qm) für Zuckerverpackungen oder auch Beschichtungen von Karton mit PE und/oder Aluminium z.B. für Milchverpackungen.

Die zur Zeit mengenmäßig größte Anwendung der Extrusionsbeschichtung ist die Beschichtung von Papier oder Karton mit Polyethylen. Hierbei werden hauptsächlich Polyethylene mit niedriger Dichte (PE-LD) verwendet, die über einen Hochdruck Prozess hergestellt wurden.

Neben Polyethylen finden zunehmend auch Polyamide in der Extrusionsbeschichtung Anwendung, meistens in Kombination mit Polyethylen und Haftvermittlerprodukten in der Coextrusionsbeschichtung.

Häufig wird das sog. "Edge waving" in der Extrusionsbeschichtung mit Polyamiden als eine sich periodisch wiederholende Schwankung der Schmelzfahnenbreite beobachtet. Der äußere Rand der aus der Beschichtungsdüse austretenden Schmelzefahne verläuft nicht auf einer Linie in Abzugsrichtung. "Edge waving" tritt meistens nur in der Monobeschichtung auf und kann durch geschickte Wahl von geeigneten Produkten im Zuge der so genannten Coextrusionsbeschichtung weitgehend unterdrückt werden. Inhomogene Temperaturverteilungen im Extruder, nicht optimierte Schneckengeometrien sowie mangelnde Granulatqualität können die oben genannten Effekte verstärken und zum Abriss der Schmelzebahn über die gesamte Breite führen, insbesondere bei höherer Abzugsgeschwindigkeit.

Mehrschichtige Verbundfolien mit Polyamid 6 Komponenten finden hauptsächlich Anwendung als Verpackungsfolie für Lebensmittel, Industrie-Produkte verschiedener Art und medizinische Geräte. Für keimfreie Verpackungen wird eine Sterilisation mit Heißdampf, Ethylenoxid oder Gamma-Strahlen vorgenommen.

Herkömmliche Polyamid 6 Typen wie Durethan® B31 F oder Durethan® B35 F neigen besonders in der Monoextrusionsbeschichtung zu ausgeprägtem "Edge waving" und "Neck in" (NI) bei hohen Verarbeitungsgeschwindigkeiten. Unter NI versteht man die seitliche Einschnürung der Schmelzefahne nach Düsenaustritt.

Die DE 2111854 beschreibt ein Verfahren zur Beschichtung von Trägerwerkstoffen mit Polyamid.

In der Literatur wird die höchste Beschichtungsgeschwindigkeit mit Polyamid 6 auf Papier oder Karton mit etwa 250 m/min angegeben (TAPPI International Coextrusion Seminar, 6.-8. Juni 1978, Amsterdam, E. Laiho, D. Michael; TAPPI European PLACE Conference, Rom, Mai 2003, Schwarz, Mahlke).

Die erfindungsgemäße Aufgabe bestand darin, ein Extrusionsverfahren zur Beschichtung von Substraten mit Polyamid zu finden, das höhere Beschichtungsgeschwindigkeiten zulässt und dabei "Edge waving" und "Neck in" vermeidet. Die Lösung der erfindungsgemäßen Aufgabe wird dadurch erreicht, dass das Standard Verfahren zur Extrusionsbeschichtung mit einem durch nanoskalige Partikel modifizierten Polyamid kombiniert wird und die Beschichtungsgeschwindigkeit mindestens 250 m/min beträgt.

Gegenstand der vorliegenden Erfindung ist deshalb ein Extrusionsverfahren zur Beschichtung von Substraten mit Polyamiden, dadurch gekennzeichnet, dass nanoskalige Partikel enthaltende Polyamide, bevorzugt in der Mono- und/oder Coextrusionsbeschichtung, eingesetzt werden und diese mit Beschichtungsgeschwindigkeiten von mindestens 250 m/min, bevorzugt 250 bis 350 m/min verarbeitet werden.

Die gemäß dem erfindungsgemäßen Verfahren erhältlichen Extrudate zeigen alle positiven Eigenschaften, wie man sie aus dem Stand der Technik her von der Verwendung nanoskaliger Partikel her kennt, wie beispielsweise höhere Reißfestigkeit und Bruchfestigkeit, feinere sphärolitische Struktur, weniger Lichtstreuung und die Erhöhung der Barrierewirkung gegen Gase.

Überraschenderweise wird aber zusätzlich durch die Verwendung nanoskaliger Partikel in Polyamiden in der Extrusionsbeschichtung das "Neck-In" (NI) reduziert. Eine Reduzierung des NI bedeutet eine effektive Erhöhung der Beschichtungsbreite. Wie die Ergebnisse im Rahmen der vorliegenden Erfindung zeigen, ist der NI bei nanoskalige Partikel enthaltenden Polyamiden auch invariant gegenüber Variationen in der Beschichtungsgeschwindigkeit, während der NI bei herkömmlichem Polyamid mit der Beschichtungsgeschwindigkeit zunimmt. (Schwarz, Mahlke, TAPPI European PLACE Conference, Rom, Mai 2003).

In einer bevorzugten Ausführungsform werden in der vorliegenden Erfindung nanoskalige Partikel enthaltende Polyamide zusammen mit Polyalkylenen, besonders bevorzugt mit Polyethylen (PE) extrudiert. So können mit nanoskalige Partikel enthaltendem Polyamid zusammen mit PE und Haftvermittler in der Coextrusionsbeschichtung auf Papier, Beschichtungsgeschwindigkeiten von 300 m/min erreicht werden, ohne "Edge-waving" oder Abrisse der Schmelzefahne zu zeigen (siehe Tabelle 1).

In der Monobeschichtung kann mit nanoskalige Partikel enthaltendem Polyamid bei einem konstanten Beschichtungsgewicht von 30 g/m² eine max. Beschichtungsgeschwindigkeit von 250 m/min erreicht werden, gegenüber max. 150 m/min bei herkömmlichem Polyamid 6.

Erfindungsgemäß im Polyamid einzusetzende nanoskalige Füllstoffe sind Partikel, deren Längenabmessung in eine wählbare Richtung weniger als 1 Mikrometer beträgt. Die Bestimmung der mittleren Partikelgröße erfolgt z.B. durch visuelle Beurteilung transmissionselektronenmikroskopischer Aufnahmen von Ultradünnschnitten der entsprechenden Formmassen. Falls die Partikel stark anisotrop sind, ist unter der Partikelgröße die Abmessung der kleinsten auftretenden Achse zu verstehen. So ist im Falle von plättchenförmigen Partikeln unter der Partikelgröße die Plättchendicke zu verstehen. Eine Übersicht über erfmdungsgemäß einzusetzende nanoskalige Füllstoffe ist z.B. in *Nanocomposites - auf dem Weg zur Anwendung, KU Kunststoffe, 10, 91, 2001, 178 - 190* gegeben.

Die erfindungsgemäß einzusetzenden nanoskaligen Füllstoffe bzw. Partikel können aus der Gruppe der Oxide, Oxidhydrate von Metallen oder Halbmetallen ausgewählt sein. Bevorzugt werden erfindungsgemäß Oxide oder Oxydhydrate eines Elementes aus der Gruppe Bor, Aluminium, Gallium, Indium, Silizium, Zinn, Titan, Zirkonium, Zink, Yttrium oder Eisen eingesetzt.

Weiterhin können als nanoskalige Partikel auch dendritische oder hochverzweigte Verbindungen eingesetzt werden. Diese können z.B. aus der Gruppe der Polyethylenimine, Polypropylenimine, Polyamide, Polyesteramide, Polyester oder Polyether ausgesucht sein.

Erfindungsgemäß werden bevorzugt nanoskalige Partikel aus der Gruppe der Schichtsilikate eingesetzt. Diese können aus der Gruppe der Phyllosilikate wie Magnesiumsilikat oder Aluminiumsilikat, sowie Montmorillonit, Saponit, Beidellit, Nontronit, Hectorit, Stevensit, Vermiculit, Halloysit oder deren synthetische Analoga stammen.

Die nanoskaligen Partikel können bereits zum Beginn der Polymerisation dem Reaktionsansatz zugegeben werden. Es ist aber auch möglich, das bereits existierende Polymer in einem zweiten Verfahrensschritt mit nanoskaligen Partikeln zu modifizieren. Es können 0,01 bis 10 Gew.-%, bevorzugt 0,01 - 5,0 Gew. %, besonders bevorzugt 0,1 - 3 Gew.-% nanoskalige Partikel in das Polymer eingearbeitet werden.

Das zu beschichtende Substrat ist dabei nicht auf Papier oder Karton beschränkt, sondern beinhaltet auch weitere Materialien auf Cellulosebasis wie z.B. Cellophan, Metalle wie z.B. Aluminiumfolie und andere polymere Substrate wie z.B. PET, Polyethylen, Folien aus biaxialorientiertem Polypropylen oder Polyamide.

Erfindungsgemäß einzusetzende Polyamide sind bekannte aliphatische oder aromatische oder teilaromatische Homopolyamide oder Copolyamide oder Mischungen aus mehreren Polyamiden oder Mischungen aus Polyamiden mit Copolyamiden und / oder weitere Polymere. Bevorzugt eingesetzt werden beispielsweise und unabhängig voneinander PA6, PA66, PA 11, PA12, PA 46, PA610, Polyamid 6, Polyamid 10, Polyamid 12, Polyamid 66, Polyamid 610, Polyamid 6I, Polyamid 612, Polyamid 6/12, Polyamid 6/66, Polyamid 6I/6T, Polyamid MXD6, Polyamid 6/6I, Polyamid 6/6T, Polyamid 6/IPDI und Copolymeren sowie Polymermischungen dieser Gruppen.

Besonders bevorzugt wird PA 6 oder PA 66 oder ein Copolyamid aus Caprolactameinheiten und Einheiten abgeleitet von Hexamethylendiamin und Isophthalsäure oder Hexamethylendiamin und Terephthalsäure oder Hexamethylendiamin und Adipinsäure eingesetzt. Bevorzugt sind Copolyamid Anteile von 0-50 Gew.-%, besonders bevorzugt sind Copolyamid Anteile zwischen 0-25 Gew.-%, ganz besonders bevorzugt sind 0-15 Gew.-%.

Gegenstand der vorliegenden Erfindung sind aber auch die Folien, Beschichtungen, Formmassen oder Hohlkörper die durch das erfindungsgemäße Extrusionsverfahren mittels nanoskaliger Partikel enthaltender Polyamide erhalten werden sowie Verpackungen aller Art die man durch Falten oder Versiegeln der mittels nanoskalige Partikel enthaltenden Polyamide bzw. diese enthaltende Polymergemische mit anderen Polymeren wie beispielsweise mit PE, erhält.

Bevorzugt, besonders bevorzugt oder ganz besonders bevorzugt sind Ausführungsformen, welche von den unter bevorzugt, besonders bevorzugt oder ganz besonders bevorzugt genannten Parametern, Verbindungen, Definitionen und Erläuterungen Gebrauch machen.

Die oben aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen kombiniert werden.

Die durch das erfindungsgemäße Extrusionsverfahren hergestellten Beschichtungen, Folien oder Hohlkörper können aus nur einer Polyamidschicht bestehen oder einen mehrschichtigen Aufbau aufweisen. Im Falle des mehrschichtigen Aufbaus können die weiteren Schichten z.B. aus Polyolefinen wie z.B. Polyethylen oder Polyethylencopolymeren wie z.B. Copolymeren aus Ethylen und Acrylsäure oder Methacrylsäure oder Barrierepolymeren wie z.B. Polyvinylidenchlorid oder Copolymeren aus Ethylen und Vinylalkohol oder aus weiteren Polyamidschichten bestehen.

Die Herstellung der für das erfindungsgemäße Extrusionsverfahren einzusetzenden Ausgangspolyamide kann in einem kontinuierlichen oder in einem diskontinuierlichen Verfahren in bekannter Weise erfolgen. Bei einem diskontinuierlichen Verfahren kann es sich z.B. um die Polymerisation in einem Autoklaven handeln. Bei einem kontinuierlichen Verfahren kann es sich z.B. um die Polymerisation in einem sogenannten VK-Rohr handeln. Bevorzugt erfolgt die Herstellung nach einem kontinuierlichen Verfahren. Zur Erreichung hoher Molmassen, wie sie für bestimmte Anwendungen in der Folienextrusion oder in der Extrusionsbeschichtung erforderlich sein können, kann der Polymerisation in Schmelze eine Nachkondensation in fester Phase nachgeschaltet sein. Die nanoskaligen Partikel können dabei in einem beliebigen Verfahrensschritt oder in mehreren Verfahrensschritten zugegeben oder in einem nachgeschalteten Schritt eincompoundiert werden.

Die nach dem erfindungsgemäßen Extrusionsverfahren herzustellenden Formmassen, Formkörper, Hohlkörper oder Folien können vor ihrem letztendlichen Einsatzzweck weiter bearbeitet oder umgeformt werden. Sie können z.B. zu Verpackungszwecken eingesetzt werden. Erfindungsgemäß herzustellende Folien oder Formmassen können z.B. zur Verpackung von Lebensmitteln, wie Milch, Obstsäfte, Fleisch und Fleischprodukten, Wurst, Käse, Getränke u.v.m. verwendet werden. Die erfindungsgemäßen Folien oder Formmassen können z.B. auch zur Verpackung von Kosmetika wie z.B. Sonnenschutzcremes oder Chemikalien wie z.B. Pflanzenschutzmittel verwendet werden.

Die Eigenschaften der zu extrudierenden nanoskalige Partikel enthaltenden Polyamide lassen sich durch Zusatz von Elastomeren verbessern, z. B. im Hinblick auf Knickbruch (DE-A 10 23 78 20). Die Vielzahl der Kombinationsmöglichkeiten ermöglicht eine sehr große Zahl von Produkten mit unterschiedlichsten Eigenschaften.

Wie bereits oben beschrieben können die erfindungsgemäß einzusetzenden nanoskalige Partikel enthaltenden Polyamide auch im Gemisch mit anderen Polyamiden und/oder weiteren Polymeren verwendet werden.

Derartige Polymere werden z.B. in Houben-Weyl, Methoden der organischen Chemie, Bd. 14/1 (Georg-Thieme-Verlag), Stuttgart, 1961, Seiten 392 bis 406 und in der Monographie von C.B. Bucknall, "Toughened Plastics" (Applied Science Publishers, London, 1977) beschrieben.

### Beispiele:

### Prüfmethoden:

Visuelle Beobachtung des Beschichtungsverfahrens

### Verwendete Materialien:

Durethan® KU2-2601, kommerziell erhältliches Polyamid der Fa. LANXESS Deutschland GmbH

Durethan® B35 FKA, kommerziell erhältliches Polyamid 6 der Fa. LANXESS Deutschland GmbH

Bynel® 4288, kommerziell erhältlich bei der DuPont

Novex® 19N430, kommerziell erhältliches PE-LD der Firma BP

Die Versuche wurden auf der ER-WE-PA Davis-Standard Extrusionsbeschichtungslinie mit einer 800 mm breiten Beschichtungsdüse der EC Erdölchemie in Köln durchgeführt.

### Vergleichsbeispiel 1

Polyamid: 25 g/qm B35 FKA

Haftvermittler: 5 g/m² Bynel® 4288

Polyethylen: 15 g/m² Novex® 19N430

Beschichtungsgeschwindigkeit: 200 m/min

### Vergleichsbeispiel 2

Polyamid: 15 g/qm B35 FKA

Haftvermittler: 5 g/m² Bynel® 4288

Polyethylen: 15 g/m² Novex® 19N430

Beschichtungsgeschwindigkeit: 300 m/min

### Beispiel 1

Polyamid: 15 g/qm KU2-2601

Haftvermittler: 5 g/m² Bynel® 4288

Polyethylen: 15g/m² Novex® 19N430

Beschichtungsgeschwindigkeit: 200 m/min

### Beispiel 2

Polyamid: 15 g/qm KU2-2601

Haftvermittler: 5 g/m² Bynel® 4288

Polyethylen: 15 g/m² Novex® 19N430

Beschichtungsgeschwindigkeit: 300 m/min

### Vergleichsbeispiel 3 Monobeschichtung

Polyamid: 30 g/m² Durethan® B35 FKA

Beschichtungsgeschwindigkeit: 150 m/min

### Beispiel 3 Monobeschichtung KU2-2601

Polyamid: 30 g/m² KU2-2601

Beschichtungsgeschwindigkeit: 250 m/min

Die Ergebnisse der Coextrusionsversuche sind in Tabelle 1 zusammengefasst

**Tabelle 1:**

| Versuch | Polyamid-Typ | Verarbeitungsgeschwindigkeit | Verarbeitungsverhalten |
|---|---|---|---|
| | | | |
| Vergleichsbeispiel 1 | B35 FKA | 200 m/min | 0 |
| Vergleichsbeispiel 2 | B35 FKA | 300 m/min | - |
| Beispiel 1 | KU2-2601 | 200 m/min | + |
| Beispiel 2 | KU2-2601 | 300 m/min | + |

**Tabelle 2:**

| Versuch | Polyamid-Typ | Verarbeitungsgeschwindigkeit | Kantenstabilität |
|---|---|---|---|
| | | | |
| Vergleichsbeispiel 3 | B35 FKA | 150 m/min | 0 |
| Beispiel 3 | KU2-2601 | 250 m/min | + |
| +: ausgezeichnetes Verarbeitungsverhalten | | | |
| 0: noch gerade akzeptables Verarbeitungsverhalten | | | |
| -: inakzeptables Verarbeitungsverhalten | | | |

## Patentansprüche

1. Extrusionsverfahren zur Beschichtung von Substraten mit Polyamiden, **dadurch gekennzeichnet, dass** nanoskalige Partikel enthaltende Polyamide auf die Substrate in der Mono- und/oder Coextrusionsbeschichtung mit Beschichtungsgeschwindigkeiten von mindestens 250 m/min aufgebracht werden.

2. Verfahren gemäß Anspruch 1, **dadurch gekennzeichnet, dass** nanoskalige Partikel enthaltendes Polyamid 6 eingesetzt wird.

3. Verfahren gemäß Anspruch 1, **dadurch gekennzeichnet, dass** das nanoskalige Partikel enthaltende Polyamid mit anderen Polyamiden und/oder Copolyamiden und/oder weiteren Polymeren gemischt wird.

4. Verfahren gemäß Anspruch 3, **dadurch gekennzeichnet, dass** als weiteres Polymer Polyethylen eingesetzt wird.

5. Verwendung von nanoskaltige Partikel enthaltenden Polyamiden zum Aufbringen auf Substrate in der Mono- und/oder Coextrusionsbeschichtung mit Beschichtungsgeschwindigkeiten von mindestens 250 m/min.

## Claims

1. Extrusion process for coating substrates with polyamides, **characterized in that** polyamides comprising nanoscale particles are applied to the substrates in the mono- and/or coextrusion coating operation with coating rates of at least 250 m/min.

2. Process according to Claim 1, **characterized in that** nylon-6 comprising nanoscale particles is used.

3. Process according to Claim 1, **characterized in that** the polyamide comprising nanoscale particles is mixed with other polyamides and/or copolyamides and/or further polymers.

4. Process according to Claim 3, **characterized in that** polyethylene is used as a further polymer.

5. Use of polyamides comprising nanoscale particles for application to substrates in mono- and/or coextrusion coating operations with coating rates of at least 250 m/min.

## Revendications

1. Procédé d'extrusion pour le revêtement de supports avec des polyamides, **caractérisé en ce que**, dans le revêtement par mono- et/ou coextrusion, des polyamides contenant des nanoparticules sont appliquées sur les supports à des vitesses d'enduction d'au moins 250 m/min.

2. Procédé selon la revendication 1, **caractérisé en ce qu'**on utilise du polyamide 6 contenant des nanoparticules.

3. Procédé selon la revendication 1, **caractérisé en ce que** le polyamide contenant des nanoparticules est mélangé avec d'autres polyamides et/ou copolyamides et/ou d'autres polymères.

4. Procédé selon la revendication 3, **caractérisé en ce qu'**on utilise comme autre polymère du polyéthylène.

5. Utilisation de polyamides contenant des nanoparticules pour l'application sur des supports, dans le revêtement par mono- et/ou coextrusion, à des vitesses d'enduction d'au moins 250 m/min.
